# EUROPÄISCHE PATENTSCHRIFT

(11) **EP 3 969 324 B1**
(45) Veröffentlichungstag und Bekanntmachung des Hinweises auf die Patenterteilung: **17.01.2024**
(21) Anmeldenummer: 20725468.1
(22) Anmeldetag: 07.05.2020
(51) Int. Cl.: B60N 2/06, B60N 2/02

(54) **MOTORTRÄGER FÜR EINEN FAHRZEUGSITZ UND MONTAGEVERFAHREN**
MOTOR SUPPORT FOR A VEHICLE SEAT AND MOUNTING METHOD
SUPPORT DE MOTEUR POUR UN SIÈGE DE VÉHICULE ET PROCÉDÉ DE MONTAGE

(30) Priorität: 15.05.2019 DE 102019207072
(43) Veröffentlichungstag der Anmeldung: 23.03.2022
(73) Patentinhaber: Brose Fahrzeugteile SE & Co. Kommanditgesellschaft, Coburg, 96450 Coburg (DE)
(72) Erfinder: KOSTIN, Sergej, 96450 Coburg (DE)
(74) Vertreter: Maikowski & Ninnemann Patentanwälte Partnerschaft mbB
(86) Internationale Anmeldenummer: PCT/EP2020/062720
(87) Internationale Veröffentlichungsnummer: WO 2020/229301

(56) Entgegenhaltungen:
- FR-A1- 2 924 646
- US-A1- 2012 280 104

## Beschreibung

Die vorgeschlagene Lösung betrifft insbesondere einen Motorträger für einen Fahrzeugsitz.

Ein Motorträger für einen Fahrzeugsitz umfasst insbesondere mindestens zwei Trägerbefestigungsbereiche für die Festlegung des Motorträgers an zwei zueinander gegenüberliegenden Bauteilen des Fahrzeugsitzes sowie mindestens einen Motorbefestigungsbereich für die Festlegung eines Motors an dem Motorträger. Die Trägerbefestigungsbereiche dienen beispielsweise der Festlegung des Motorträgers an zwei gegenüberliegenden Schienenbauteilen des Fahrzeugsitzes, über die eine Längsverstellung des Fahrzeugsitzes ermöglicht ist. Ein an dem Motorträger festgelegter Motor ist dann beispielsweise eingerichtet und vorgesehen, eine Längsverstellung des Fahrzeugsitzes motorisch zu steuern. Hierbei ist der Motor beispielsweise mit mindestens einer Antriebswelle gekoppelt, die ein von dem Motor erzeugtes Antriebsmoment an eine Längsverstelleinrichtung überträgt. In diesem Zusammenhang kann beispielsweise vorgesehen sein, dass eine Antriebswelle mit einem Spindelantrieb gekoppelt ist, über den zwei einer Längsseite des Fahrzeugsitzes zugeordnete Schienen relativ zueinander verschieblich sind.

Ein Motorträger für einen Fahrzeugsitz kann hierbei grundsätzlich längserstreckt ausgebildet sein und sich im bestimmungsgemäß montierten Zustand zwischen den zwei einander gegenüberliegenden Bauteilen des Fahrzeugsitzes erstrecken. Grundsätzlich kann es sich aber auch um einen plattenförmigen und damit nicht zwingend länglichen Motorträger handeln.

Ein Beispiel für einen längserstreckten Motorträger zeigt die WO 2013/013951 A1. Bei dem hierin offenbarten Motorträger ist ein Motorbefestigungsbereich mit einer Lagermulde für die Festlegung eines Elektromotors vorgesehen. Der Motor wird hierbei in die Lagermulde des Motorbefestigungsbereichs an dem Motorträger eingesetzt. Eine Fixierung des Motors an dem Motorbefestigungsbereich erfolgt dann typischerweise über separate Befestigungsmittel, beispielsweise Niete, Schrauben oder Bolzen.

Weitere Motorträger für einen Fahrzeugsitz sind in der US 2012/280104 A1 und der FR 2 924 646 A1 beschrieben.

Der vorgeschlagenen Lösung liegt hiervon ausgehend die Aufgabe zugrunde, einen Motorträger für einen Fahrzeugsitz weiter zu verbessern und insbesondere die Montage eines Motors an den Motorträger zu vereinfachen.

Diese Aufgabe wird sowohl mit einem Motorträger nach Anspruch 1 als auch mit einem Montageverfahren nach Anspruch 13 gelöst.

Es ist ein Motorträger vorgeschlagen, der an seinem Motorbefestigungsbereich mindestens eine Schwenklagerstelle und mindestens ein Fixierungselement ausbildet. Hierbei ist die mindestens eine Schwenklagerstelle eingerichtet, dem Motor an dem Motorbefestigungsbereich eine Montageposition vorzugeben, aus der der an dem Motorbefestigungsbereich angeordnete Motor entlang eines mit der wenigstens einen Schwenklagerstelle vorgegebenen Schwenkwegs in eine Fixierposition schwenkbar ist, bei deren Erreichen der Motor über das mindestens eine Fixierungselement fixiert ist.

Gemäß der vorgeschlagenen Lösung gibt somit der Motorbefestigungsbereich einerseits eine Montageposition für den an dem Motorträger festzulegenden Motor sowie eine Verlagerungsbewegung des Motors während der Montage vor, über die der Motor bestimmungsgemäß an dem Motorbefestigungsbereich fixiert wird. Indem dann der Motor bei Erreichen der Fixierposition über das mindestens eine Fixierungselement fixiert wird, kann die Montage und Fixierung des Motors erleichtert werden. Insbesondere kann die Fixierung werkzeuglos und auf Basis einer durch die Gestaltung des Motorbefestigungsbereichs vorgegebenen Montagereihenfolge erfolgen. Dies vereinfacht den Montageprozess und machte diesen weniger anfällig für Fehler.

Die vorgeschlagene Lösung kann hierbei insbesondere vorsehen, dass allein über die an der Schwenklagerstelle ausgeführte Schwenkbewegung des Motors eine definierte Überführung in die Fixierposition erreichbar ist, sodass bei deren Erreichen der Motor ohne weitere Einwirkung auf das mindestens eine Fixierungselement an dem Motorbefestigungsbereich fixiert wird. Es kann folglich die auf dem Motor ausgeübte Verstellkraft, um den Motor um die Schwenklagerstelle in die Fixierposition zu schwenken, nutzbar gemacht werden, um den Motor (bzw. einen an dem Motor vorgesehenen Fixierabschnitt, zum Beispiel am Gehäuse des Motors) in kraft- und/oder formschlüssigen Eingriff mit dem mindestens einen Fixierungselement zu bringen.

Dass der Motorbefestigungsbereich die mindestens eine Schwenklagerstelle und das mindestens eine Fixierungselement ausgebildet, schließt insbesondere sein, dass die mindestens eine Schwenklagerstelle und das mindestens eine Fixierungselement integraler Bestandteil des Motorbefestigungsbereichs sind, also beispielsweise hieran ausgeformt oder angeformt sind. Mit Blick auf eine Reduzierung separate Elemente für die Festlegung des Motors an dem Motorträger handelt es sich somit nicht um separat gefertigte und nachträglich an dem Motorträger angebrachte oder hieran anzubringende Elemente.

Die mindestens eine Schwenklagerstelle ist in einer Ausführungsvariante an einem an dem Motorbefestigungsbereich vorstehenden Schwenklagerabschnitt ausgebildet. Ein vorstehender Schwenklagerabschnitt kann hierbei den Vorteil mit sich bringen, ein Ansetzen des Motors an den Schwenklagerabschnitt zu erleichtern. Ein von umliegenden Abschnitten des Motorbefestigungsbereichs vorstehender Schwenklagerabschnitt kann dementsprechend leichter zugänglich sein.

Die Schwenklagerstelle ist durch einen kugelkopfförmigen Schwenklagerabschnitt gebildet. Über das Ansetzen an einen kugelkopfförmigen Schwenklagerabschnitt wird vergleichsweise einfach ein Schwenklager bereitgestellt, über das der bereits an den Motorbefestigungsbereich angesetzte Motor entlang eines definierten Schwenkweges schwenkbar ist. Beispielsweise bildet dann der Motorträger zusammen mit einem Motor eine Motorträgerbaugruppe, bei der der Motor mit einer mit dem kugelkopfförmigen Schwenklagerabschnitt korrespondierenden Stecköffnung ausgebildet ist, die auf den kugelkopfförmigen Schwenklagerabschnitt aufgesteckt werden kann und damit nach Art einer Kugel-Pfannen-Paarung ein Schwenklager für den Motor an dem Motorbefestigungsbereich bereitstellt.

An dem Motorbefestigungsbereich kann grundsätzlich eine Lagermulde für den Motor ausgebildet sein. Eine derartige Lagermulde nimmt zumindest teilweise den bestimmungsgemäß in der Fixierposition vorliegenden Motor schützend auf.

Ein Schwenklagerabschnitt kann bei Vorhandensein einer entsprechenden Lagermulde beispielsweise in diese ragen. Dies schließt beispielsweise ein, dass an einer die Lagermulde berandenden Seitenwand des Motorbefestigungsbereichs ein vorstehender Lagerabschnitt, insbesondere ein kugelkopfförmiger Schwenklagerabschnitt vorgesehen ist. Die entsprechende Seitenwand kann beispielsweise eine - bezogen auf eine Längserstreckungsrichtung des Motorträgers - vordere oder hintere Seitenwand sein. Die Längserstreckungsrichtung des Motors verläuft hierbei beispielsweise im bestimmungsgemäß an ein Sitzuntergestell montierten Zustand des Motorträgers des Fahrzeugsitzes parallel zu einer Querrichtung, die von einem ersten Bauteil, an dem der Motorträger festgelegt ist, zu einem anderen Bauteil weist, an dem der Motorträger ebenfalls festgelegt ist

In einer Ausführungsvariante sind wenigstens zwei Schwenklagerstellen an dem Motorbefestigungsbereich ausgebildet, die gemeinsam eine Schwenkachse für das Schwenken des Motors aus der Montageposition in die Fixierposition vorgeben. Über wenigstens zwei Schwenklagerstellen, an denen der Motor angesetzt werden kann, ist eine eindeutige Vorgabe einer Schwenkachse möglich, um die der Motor aus der Montageposition in die Fixierposition schwenkbar ist. Hiermit geht folglich eine Reduzierung der möglichen Schwenkwege aus der Montageposition einher.

In einer Ausführungsvariante ist das mindestens eine Fixierungselement verlagerbar. Dies schließt beispielsweise ein, dass das mindestens eine Fixierungselement elastisch verlagerbar ausgebildet oder verstellbar gelagert ist. Über die Verlagerbarkeit des mindestens einen Fixierungselements lässt sich beispielsweise einfach eine selbsttätige Fixierung des bestimmungsgemäß in die Fixierposition geschwenkten Motors über das mindestens eine Fixierungselement bereitstellen. Beispielsweise ist hierfür das Fixierungselement elastisch in Richtung einer Verriegelungsstellung vorgespannt, aus der das Fixierungselement durch den in Richtung der Fixierposition verlagerten Motor aufgrund eines auf das Fixierungselement einwirkenden Fixierabschnitts des Motors verlagert wird und in die das mindestens eine Fixierungselement unter Wirkung einer Vorspannkraft zur Verriegelung mit dem Verbindungsabschnitt des Motors selbsttätig zurück verstellt wird, sobald der Motor die Fixierposition erreicht hat. Das mindestens eine elastisch verlagerbar ausgebildete Fixierungselement ist folglich derart angeordnet, dass das Fixierungselement unter Wirkung des in Richtung der Fixierposition verlagerten Motors entgegen der Vorspannkraft verlagert wird und sich in Richtung der Verriegelungsstellung zurück verlagert, sobald der Motor die Fixierposition erreicht hat. Das Fixierungselement kann hierbei z.B. kraft- und/oder formschlüssig an einem Fixierabschnitt des Motors einschnappen, wenn der Motor die Fixierposition an dem Motorbefestigungsbereich erreicht hat und entsprechend eine bestimmte Lage an dem Motorträger einnimmt.

Beispielsweise umfasst das mindestens eine Fixierungselement, insbesondere in einer vorstehend erläuterten Ausführungsvariante mit einem elastisch verlagerbaren Fixierungselement, einen Rastclip, der mit einem Rasthaken oder einer Rastnase an einem Fixierabschnitt des Motors, insbesondere an einem Fixierabschnitt, der in einem Gehäuse des Motors vorgesehen ist, einschnappt. Dies schließt insbesondere ein, dass ein entsprechendes Fixierungselement in eine Öffnung oder Aussparung an einem solchen Fixierabschnitt des Motors einschnappen kann.

In einer Ausführungsvariante ist an dem Motorbefestigungsbereich des Motorträgers zusätzlich zu dem mindestens einen Fixierungselement mindestens ein Sicherungselement vorgesehen. Dieses Sicherungselement liegt in dem zur Montage des Motors bereitgestellten Motorträger in einer Grundstellung vor, in der das mindestens eine Sicherungselement eine zur Fixierung des Motors auszuführende Verlagerungsbewegung des mindestens einen Fixierungselements gestattet. Das Sicherungselement ist an dem Motorbefestigungsbereich in eine Sicherungsstellung überführbar, in der das mindestens eine Sicherungselement einer Verlagerungsbewegung des mindestens einen Fixierungselements entgegenwirkt. Das Fixierungselement kann folglich ohne Blockierung durch das in seiner Grundstellung vorliegende und separate an den Motorbefestigungsbereich angebrachte oder an dem Motorbefestigungsbereich ausgebildete Sicherungselement verlagert werden, um den Motor an dem Motorbefestigungsbereich zu fixieren. Wird das Sicherungselement nachfolgend, d.h. insbesondere nachdem der Motor in die Fixierposition geschwenkt wurde, in seine Sicherungsstellung überführt, ist eine Verlagerung des mindestens einen Fixierungselements zumindest insoweit blockiert, dass das Fixierungselement den Motor nicht freigeben kann. Die über das mindestens eine Fixierungselement erreichte Fixierung des Motors an dem Motorträger ist somit durch das in seiner Sicherungsstellung vorliegende Sicherungselement zusätzlich gesichert und nicht mehr ohne Weiteres lösbar. Eine Verlagerungsbewegung, die das mindestens eine Fixierungselement ausführen müssten, um den Motor freizugeben und den Motor wieder von dem Motorträger trennen zu können, ist somit erst möglich, wenn das Sicherungselement zuvor wieder in seine Grundstellung überführt wurde.

Das Vorsehen eines Sicherungselements an dem Motorbefestigungsbereich eines Motorträgers ist hierbei auch unabhängig von der Vorgabe einer Schwenklagerstelle für die Montage des Motors. Insbesondere kann unabhängig von einer Schwenklagerstelle über ein an dem Motorbefestigungsbereich ausgebildetes und damit zum Beispiel angeformtes oder ausgeformtes Sicherungselement, das aus einer Grundstellung in eine Sicherungsstellung verlagerbar ist, kann grundsätzlich eine werkzeuglose Fixierung eines Motors an einem Motorträger unterstützt werden.

Vor diesem Hintergrund kann ein Motorträger für den Fahrzeugsitz mindestens zwei Trägerbefestigungsbereiche und mindestens einen Motorbefestigungsbereich umfassen, wobei an dem Motorbefestigungsbereich mindestens ein Fixierungselement zur Fixierung des Motors an dem Motorträger vorgesehen ist und der Motorträger an dem Motorbefestigungsbereich zusätzlich mindestens eine Sicherungselement ausbildet, das
- in einer Grundstellung vorliegt, in der das mindestens eine Sicherungselement eine zur Fixierung des Motors auszuführende Verlagerungsbewegung des mindestens einen Fixierungselements gestattet, und
- an dem Motorbefestigungsbereich in eine Sicherungsstellung überführbar ist, in der das mindestens eine Sicherungselement einer Verlagerungsbewegung des mindestens einen Fixierungselements entgegenwirkt.

Die Verlagerungsbewegung, der das in der Sicherungsstellung vorliegende Sicherungselement entgegenwirkt, kann hierbei identisch oder unterschiedlich zur derjenigen Verlagerungsbewegung sein, die das Fixierungselement für die Fixierung des Motors ausführen hat. Die Verlagerungsbewegung, der das Sicherungselement in seiner Sicherungsstellung entgegenwirkt, ist jedenfalls diejenige Verlagerungsbewegung, die das mindestens eine Fixierungselement ausführen müsste, um den Motor freizugeben und den Motor wieder von dem Motorträger trennen zu können. Dementsprechend ist über das in seiner Sicherungsstellung überführte Sicherungselement die Fixierung des Motors an dem Motorträger (zusätzlich) gesichert.

Indem das mindestens eine Sicherungselement an dem Motorbefestigungsbereich ausgebildet, insbesondere ausgeformt oder angeformt ist, und mithin keine separat gefertigte und nachträglich an dem Motorträger angebrachte Komponente ist, kann über das Vorsehen des zusätzlichen Sicherungselements nicht nur der werkzeuglose Zusammenbau einer den Motor umfassenden Motorträgerbaugruppe unterstützt werden. Vielmehr werden hierüber auch bei der Montage zu nutzende Komponenten erheblich reduziert, der letztlich lediglich der Motorträger mit dem zu montierenden Motor zur Verfügung gestellt werden muss. Das Sicherungselement kann folglich zur werkzeuglosen Sicherung des Fixierungselements eingerichtet sein und kann hierbei in seiner Grundstellung einen an dem Motorbefestigungsbereich integral vorgesehenen Bestandteil bilden.

Beispielsweise sieht eine Ausführungsvariante vor, dass das mindestens eine Sicherungselement in seiner Grundstellung über mindestens einen Schwächungsbereich stoffschlüssig mit mindestens einem angrenzenden Abschnitt des Motorbefestigungsbereichs verbunden ist und der mindestens eine Schwächungsbereich eingerichtet ist, bei einer auf das mindestens eine Sicherungselement (manuell oder maschinell) aufgebrachten und einen vorgegebenen Schwellwert übersteigenden Kraft zu versagen, um eine Überführung des mindestens einen Sicherungselements aus seiner Grundstellung in die Sicherungsstellung zu gestatten. Beispielsweise ist der Schwächungsbereich mit einer oder mehreren Sollbruchstellen ausgebildet, sodass bei einer einen vorgegebenen Schwellwert übersteigenden Druck- oder Zugkraft auf das Sicherungselement der Schwächungsbereich gezielt versagt und derart das mindestens eine Sicherungselement für eine Verstellung in seine Sicherungsstellung freigibt.

Grundsätzlich kann der an den Motorträger bestimmungsgemäß montierte Motor beispielsweise zum Antrieb zweier Antriebswellen vorgesehen sein, die sich ausgehend von dem Motor an dem Motorträger entlang zueinander entgegengesetzter Längsrichtungen zu den einander gegenüberliegenden Bauteilen des Fahrzeugsitzes erstrecken. So ist der Motor beispielsweise an dem Motorträger zwischen zwei Antriebswellen positioniert, die sich jeweils zu einer schienenseitigen Antriebseinheit für die Längsverstellung des Fahrzeugsitzes erstrecken. Die Antriebswellen, die beispielsweise als flexible sogenannten Flexwellen ausgeführt sein können, können unterschiedliche Längen aufweisen, sodass der Motor zwischen einer kürzeren und einer längeren Antriebswelle und damit mit unterschiedlichen Abständen zu den einander gegenüberliegenden Bauteilen an dem Motorträger positioniert wird. Eine an dem Motorbefestigungsbereich des Motorträgers vorgesehene Schwenklagerstelle kann in diesem Zusammenhang für einen Verbindungsabschnitt des Motors vorgesehen sein, der nach der bestimmungsgemäßen Montage an den Motorträger dann der kürzeren Antriebswelle oder der längeren Antriebswelle zugewandt ist. In einer möglichen Weiterbildung können auch wenigstens zwei einander gegenüberliegende Schwenklagerstellen an dem Motorbefestigungsbereich vorgesehen sein, um den Motor über einen Verbindungsabschnitt wahlweise an der einen oder der anderen Schwenklagerstelle ansetzen zu können.

In einer Ausführungsvariante sind der Motorträger und der Motor derart aufeinander abgestimmt, dass der Motor in unterschiedlichen Ausrichtungen bestimmungsgemäß an den Motorbefestigungsbereich ansetzbar ist, um aus einer Montageposition an dem Motorträger in eine Fixierposition geschwenkt zu werden. Beispielsweise können der Motorbefestigungsbereich mit seiner mindestens einen Schwenklagerstelle und ein für die Verbindung mit der Schwenklagerstelle vorgesehener Verbindungsabschnitt des Motors derart ausgebildet und aufeinander abgestimmt sein, dass der Motor in wenigstens zwei um 180° um eine Längsachse des Motors gedrehten Montagepositionen an der Schwenklagerstelle ansetzbar und in die Fixierposition schwenkbar ist. Der Motor kann somit einerseits in einer ersten Ausrichtung zu dem Motorträger und andererseits wenigstens in einer zweiten Ausrichtung, in der der Motor gegenüber der ersten Ausrichtung um seine Längsachse um 180° gedreht ist, an der Schwenklagerstelle angesetzt werden, um eine Montageposition einzunehmen und anschließend in die Fixierposition zu schwenken. Der Motorbefestigungsbereich ist hierbei insbesondere so ausgestaltet, dass der Motor hieran auch in einer um 180° gedrehten Ausrichtung fixierbar ist, insbesondere über das mindestens eine Fixierungselement gegebenenfalls werkzeuglos fixierbar ist. Hierüber ist somit eine zusätzliche Flexibilität für die Montage einer Motorträgerbaugruppe mit Motorträger und Motor gegeben, um z.B. denselben Motorträger und denselben Motor für unterschiedliche Typen von Fahrzeugsitzen verwenden zu können, bei denen sich die Bauraumsituationen für die Unterbringung der Motorträgerbaugruppe voneinander unterscheiden.

Die vorgeschlagene Lösung umfasst ferner auch einen mit einer Ausführungsvariante eines vorgeschlagenen Motorträgers ausgestatteten Fahrzeugsitz.

Ferner betrifft die vorgeschlagene Lösung ein Verfahren zur Montage eines Motors an einen Motorträger für einen Fahrzeugsitz.

Der Motorträger weist hierbei einen Motorbefestigungsbereich mit mindestens einer Schwenklagestelle und mindestens einem Fixierungselement auf. Die mindestens eine Schwenklagerstelle ist hierbei durch einen kugelkopfförmigen Schwenklagerabschnitt gebildet. Das Verfahren umfasst hierbei wenigstens die folgenden Schritte:
- Ansetzen des Motors an die mindestens eine Schwenklagerstellen, sodass der Motor in einer Montageposition an dem Motorträger vorliegt, in der ein Verbindungsabschnitt des Motors die Schwenklagestelle des Motorbefestigungsbereichs kontaktiert, und
- Schwenken des Motors um eine im Kontakt des Verbindungsabschnitts mit der Schwenklagerstelle definierte Schwenkachse aus der Montageposition in eine über den Motorbefestigungsbereich vorgegebene Fixierposition, wobei der Motor bei Erreichen der Fixierposition über das mindestens eine Fixierungselement werkzeuglos an dem Motorträger fixiert wird.

Ergänzend kann vorgesehen sein, dass die Fixierposition des Motors über mindestens ein Sicherungselement gesichert wird, das aus einer Grundstellung an dem Motorbefestigungsbereich in eine Sicherungsstellung überführt wird, in der das Sicherungselement einer Verlagerungsbewegung des mindestens einen Fixierungselements entgegenwirkt, durch die der Motor wieder von dem Motorträger getrennt werden könnte.

Für die Durchführung des vorgeschlagenen Montageverfahrens kann ein vorgeschlagener Motorträger genutzt sein. Vorstehend und nachstehend im Zusammenhang mit Ausführungsvarianten eines vorgeschlagenen Motorträgers erläuterte Merkmale und Vorteile gelten somit auch für Ausführungsvarianten eines vorgeschlagenen Montageverfahrens und umgekehrt.

Die beigefügten Figuren veranschaulichen exemplarisch mögliche Ausführungsvarianten der vorgeschlagenen Lösung.

Hierbei zeigen:
- Figur 1: eine Ausführungsvariante einer Motorträgerbaugruppe mit einer Ausführungsvariante eines vorgeschlagenen Motorträgers, an dem ein Motor der Motorträgerbaugruppe festgelegt ist und der an zwei einander gegenüberliegenden Schienenbauteilen einer Längsverstelleinrichtung für einen Fahrzeugsitz festgelegt ist;
- Figuren 2A-2D: in längs geschnittener Ansicht unterschiedliche Phasen während der Durchführung eines vorgeschlagenen Montageverfahrens zur Montage des Motors an den Motorträger der Figur 1;
- Figur 3: in perspektivischer Draufsicht einen Motorbefestigungsbereich des Motorträgers der Figur 1 mit hieran festgelegtem Motor;
- Figuren 4A-4B: perspektivische Ansichten des Motorbefestigungsbereichs;
- Figur 5: Querschnittsansicht durch den Motorbefestigungsbereich im Bereich an dem Motorbefestigungsbereich ausgeformte Fixierungselemente und Sicherungselemente für die werkzeuglose Fixierung des Motors an dem Motorträger.

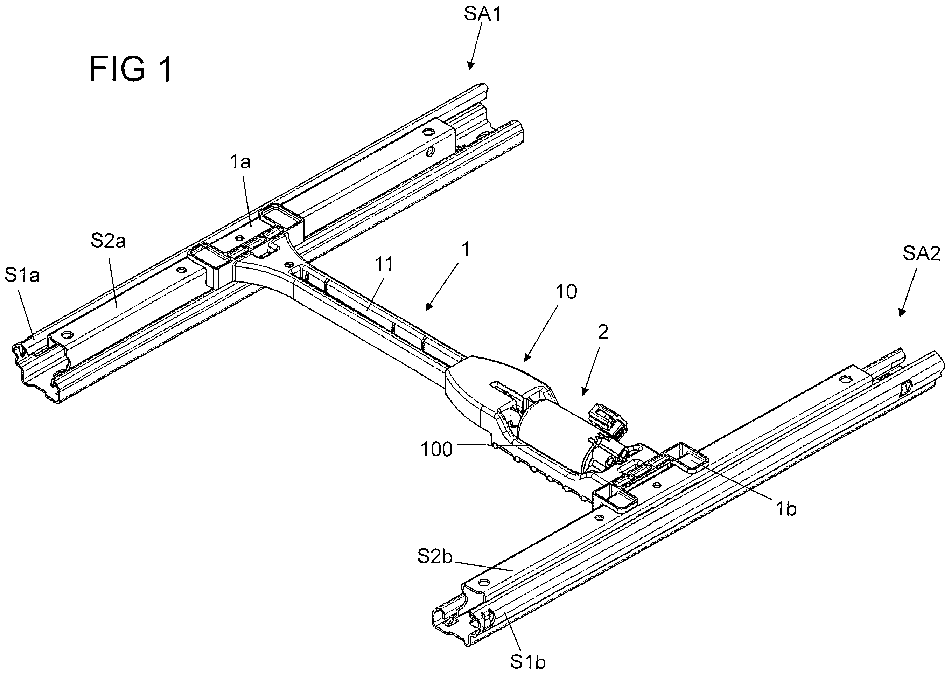

Die Figur 1 zeigt in perspektivischer Ansicht eine Ausführungsvariante eines längserstreckten Motorträgers 1 für einen Fahrzeugsitz, der über zwei endseitige Trägerbefestigungsbereiche 1a und 1b an zwei einander gegenüberliegenden Schienenanordnung SA1 und SA2 festgelegt ist. Diese Schienenanordnungen SA1 und SA2 bilden eine Längsverstelleinrichtung, über die ein an die Schienenanordnungen SA1 und SA2 bestimmungsgemäß montierter Fahrzeugsitz entlang einer Längsrichtung verschieblich ist. Jede Schienenanordnung SA1, SA2 weist ein Paar von Schienen S1a/S2a, S1b/S2b auf, die relativ zueinander verschieblich gelagert sind. Eine Unterschiene S1a oder S1b ist dabei typischerweise an einem Fahrzeugboden fixierbar, während eine Oberschiene S2a oder S2b der jeweiligen Schienenanordnung SA1, SA2 an der zugehörigen Unterschiene S1a, S1b längsverschieblich gelagert ist und ein Sitzuntergestell des Fahrzeugsitzes trägt. An den Oberschienen S2a und S2b ist der Motorträger 1 festgelegt, sodass der Motorträger 1 relativ zu den Unterschieden S1a und S1b verschieblich ist.

Der Motorträger 1 trägt einen Motor 2, hier in Form eines Elektromotors ausgebildet ist, der gegebenenfalls mit einem Getriebe und/oder elektronischen Steuerkomponenten und insbesondere einem Steckverbinder für den Anschluss an eine Stromversorgung und eine übergeordnete Steuereinheit ausgestattet ist. Über den Motor 2 sind vorliegend zwei nicht dargestellte Antriebswellen antreibbar. Diese Antriebswellen sind wiederum mit Spindelantrieben an den Schienenanordnung SA1 und SA2 gekoppelt, um über ein von dem Motor 2 erzeugtes Drehmoment die zueinander parallel verlaufenden Oberschienen S2a und S2b zu einer Verstellbewegung relativ zu den Unterschieden S1a und S1b anzutreiben und damit einen Fahrzeugsitz entlang der durch die Schienenanordnungen SA1, SA2 definierten Längsachse fremdkraftbetätigt zu verstellen. Für die Führung einer längeren Antriebswelle weist der Motorträger 1 beispielsweise in an sich bekannter Weise eine Wellenführung 11 auf, entlang der sich die Antriebswelle von einem den Motor 2 aufnehmenden Motorbefestigungsbereich 10 des Motorträgers 1 zu dem Trägerbefestigungsbereich 1a erstreckt.

Der Motorbefestigungsbereich 10 des Motorträgers 1 der Figur 1 bildet eine Lagermulde 100 aus, in der der bestimmungsgemäß gelagerte Motor 2 zumindest teilweise aufgenommen und geschützt an dem Motorträger 1 untergebracht ist. Die Lagermulde 100 weist vorliegend mehrere Stützrippen 1001 auf, über die die Lagermulde 100 zur Aufnahme des Motors 2 versteift ist und die zumindest teilweise auch Auflageflächen für den Motor 2 definieren können. An stirnseitigen vorderen und hinteren Enden der Lagermulde respektive an hier vorgesehenen vorderen und hinteren Seitenwänden des Motorbefestigungsbereichs 10 ist jeweils eine Wellenöffnung O1 oder O2 vorgesehen. Über diese Wellenöffnung O1 oder O2 kann ein Wellenende einer Antriebswelle in die Lagermulde 100 ragen, die mit dem Motor 2 zu koppeln ist, um ein Drehmoment von dem Motor 2 an die jeweilige Antriebswelle für die Verstellung der Schienenanordnungen SA1 und SA2 zu übertragen.

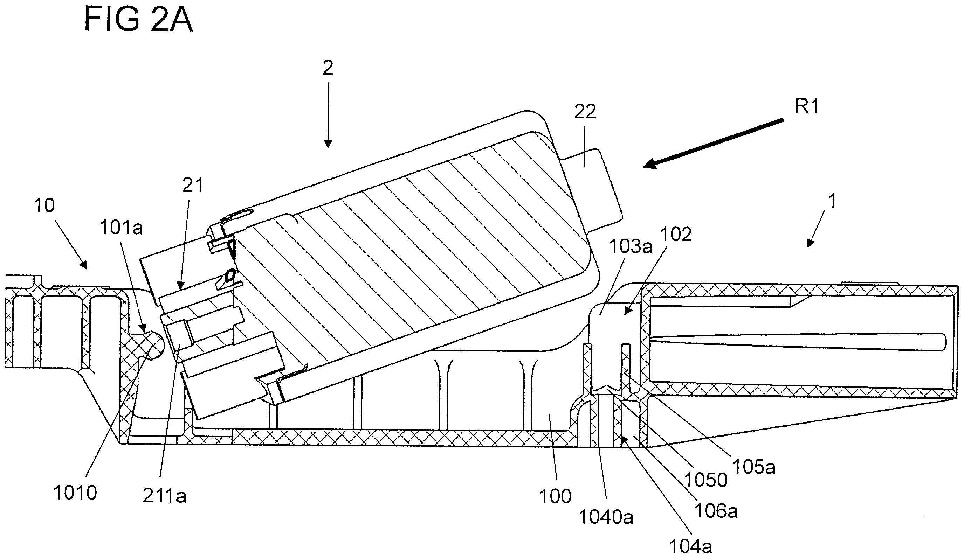

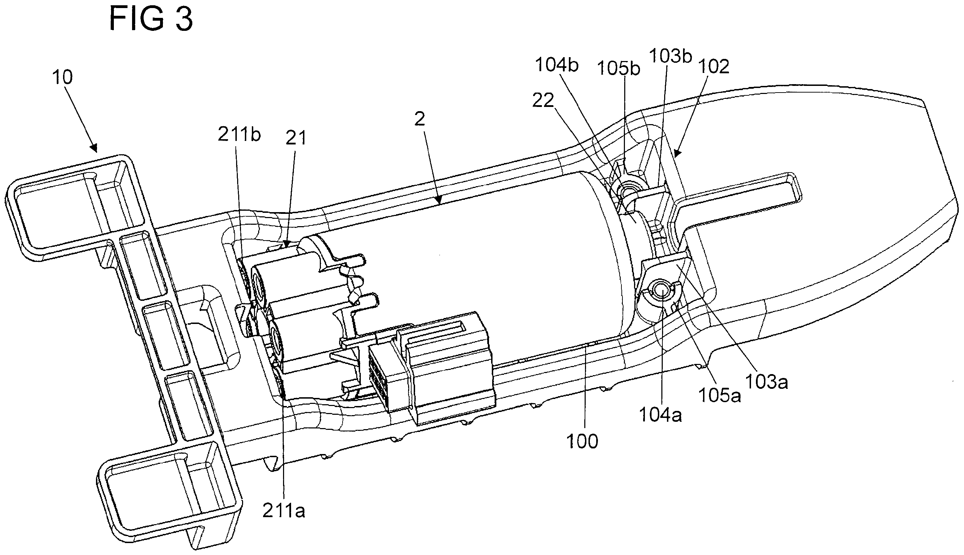

Um den Motor 2 vorliegend werkzeuglos und insbesondere ohne separate Befestigungselemente an dem Motorträger 1 festzulegen und mithin zu fixieren, bildet der Motorbefestigungsbereich 10 insbesondere in Zusammenschau mit den Figuren 2A bis 5 noch näher erläuterte Schwenklagerstellen 101a, 101b, Fixierungselemente in Form von elastisch verlagerbaren Rastclips 103a, 103b und Sicherungselemente in Form von Sicherungsstiften 104a, 104b aus.

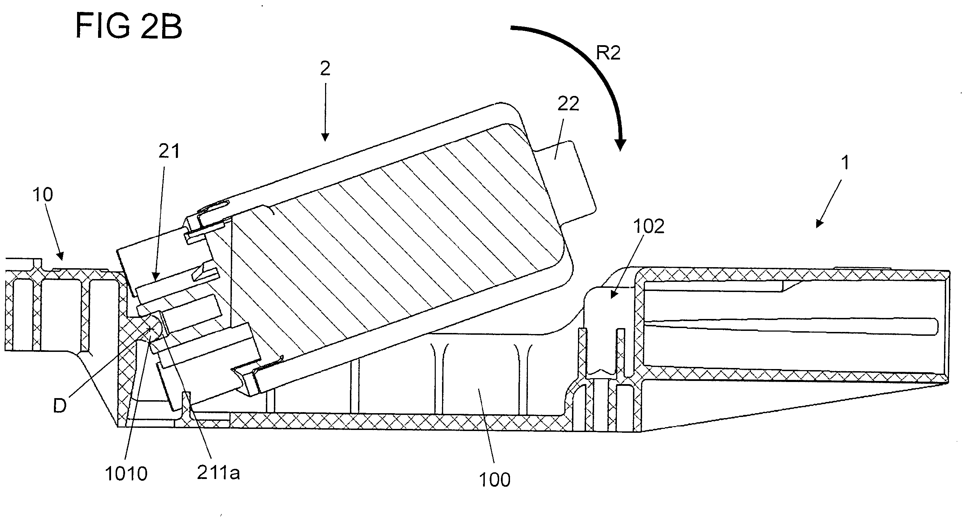

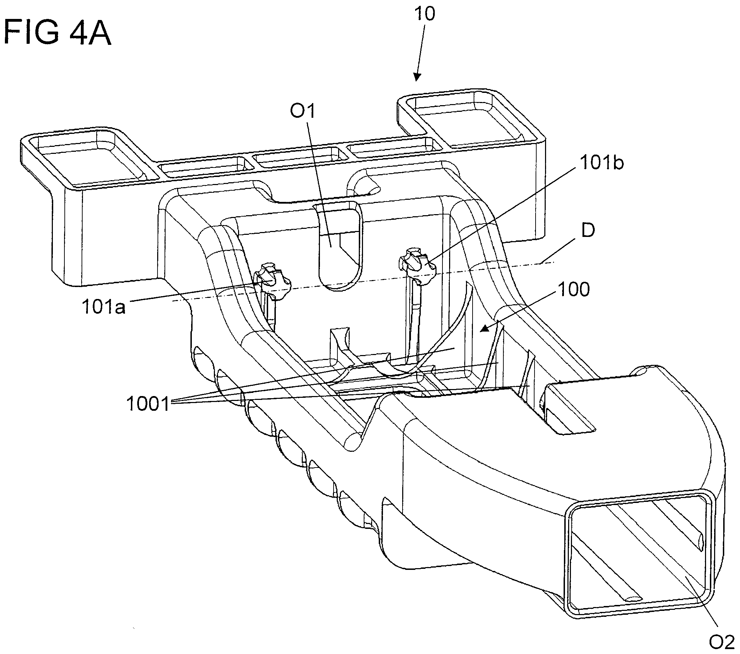

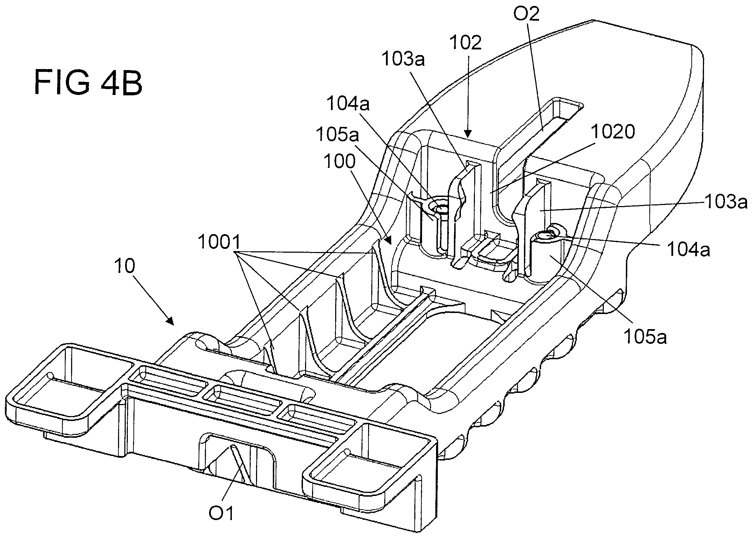

An einer bezogen auf eine Längserstreckungsrichtung des Motorträgers 1 vorderen Seitenwand des Motorbefestigungsbereichs 10 stehen in die Lagermulde 100 zwei Schwenklagerabschnitte in Form von Kugelköpfen 1010 vor. Diese Kugelköpfe 1010 definieren die zwei räumlich zueinander beabstandeten Schwenklagerstellen 101a, 101b. Über diese Schwenklagerstellen 101a und 101b ist wiederum eine - insbesondere in den Figuren 2B und 4A ersichtliche - Schwenkachse D definiert, um die der bestimmungsgemäß an den Motorbefestigungsbereich 10 angesetzte Motor 2 in eine insbesondere in der Figur 1 ersichtliche Fixierposition schwenkbar ist, um bestimmungsgemäß an dem Motorbefestigungsbereich 10 des Motorträgers 1 fixiert zu werden.

Wie insbesondere aus den Längsschnitten der Figuren 2A und 2B ersichtlich ist, ist über die Kugelköpfe 1010 der Schwenklagerstellen 101a und 101b für den Motor 2 eine Montageposition vorgegeben, in der der Motor 2 bestimmungsgemäß in einer geneigten Stellung zu dem Motorträger 1 an den Motorbefestigungsbereich 10 angesetzt wird. Hierbei werden an einem rückwärtigen Verbindungsabschnitt 21 des Motors 2 vorgesehene Stecköffnungen 211a und 211b auf jeweils einen Kugelkopf 1010 aufgesteckt. Ein entsprechender Verbindungsabschnitt 21 mit zu den Kugelköpfen 1010 der Schwenklagerstellen 101a und 101b korrespondierend ausgebildeten Stecköffnungen 211a und 211b ist beispielsweise an einem Gehäuse des Motors 2 ausgebildet. Über den Verbindungsabschnitt 21 mit den Stecköffnungen 211a und 211b kann der Motor 2 dementsprechend entlang einer ersten Montagerichtung R1 an die Kugelköpfe 1010 des Motorbefestigungsbereichs 10 gesteckt werden.

Für den an die Kugelköpfe 1010 angesteckten Motor 2 ist über die Schwenklagerstellen 101a, 101b und insbesondere die mit den Schwenklagestellen 101a und 101b definierte Schwenkachse D ein Schwenkweg vorgegeben, entlang dem Motor 2 an dem Motorbefestigungsbereich 10 um die Schwenkachse D in einer Schwenkrichtung R2 verlagerbar ist, um bestimmungsgemäß an dem Motorträger 1 fixiert zu werden. Vorliegend ist der Motor 2 hierfür mit seinem vorderen Ende über die an seinem rückwärtigen Ende definierte Schwenkachse D in Richtung der Lagermulde 100 schwenkbar, bis ein an dem vorderen Ende des Motors 2 vorgesehener Fixierabschnitt in Form eines Rastvorsprungs 22 in eine Rastöffnung 1020 einer an dem Motorbefestigungsbereich 10 ausgebildeten Fixiereinrichtung 102 einrastet. Der Rastvorsprung 22 ist vorliegend hülsenförmig mit einem Wellenkanal für die Kopplung des Motors 2 mit einer der Antriebswellen ausgebildet.

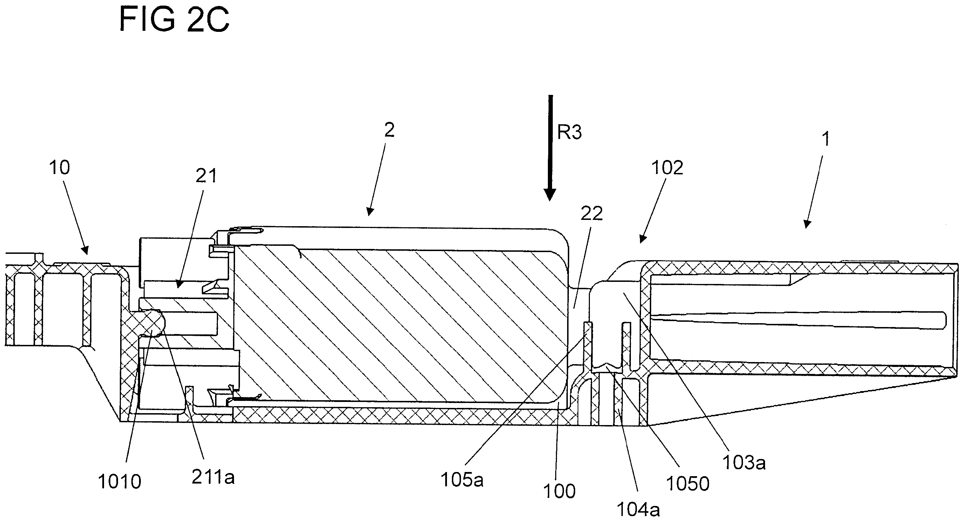

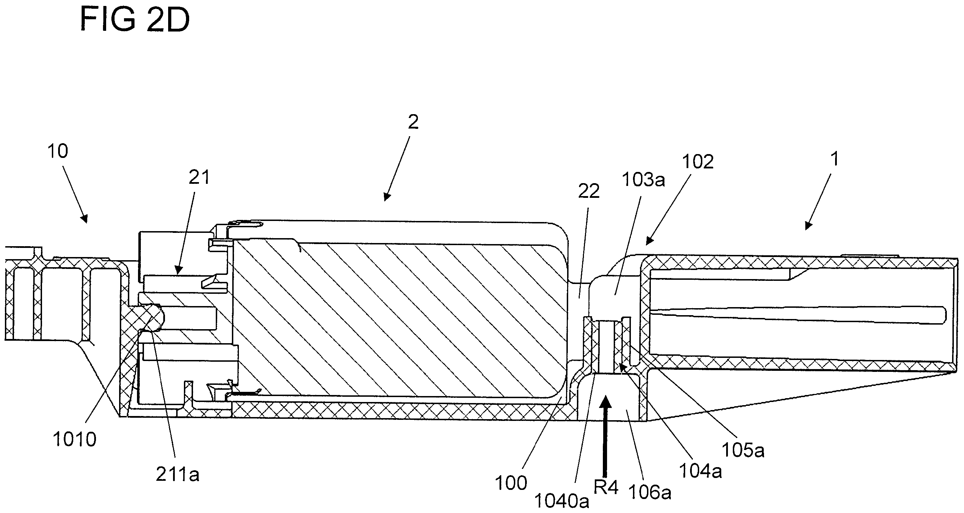

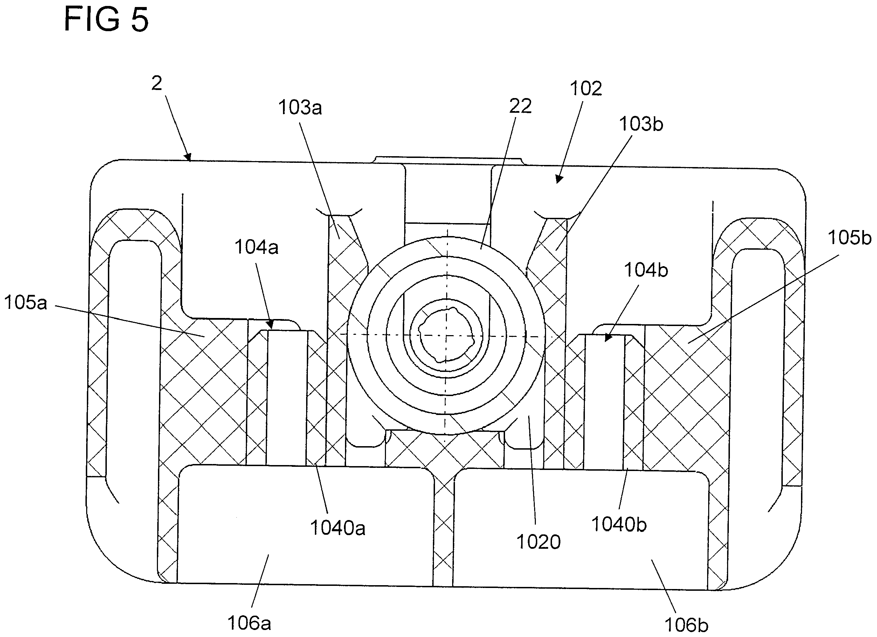

Wie insbesondere anhand der Figuren 2C und 2D und 5 dargestellt ist, verdrängt der Motor 2 bei der Verlagerung seines vorderen Endes in Richtung eines Bodens der Lagermulde 100 (entlang einer zweiten Montagerichtung R3) die einander gegenüberliegenden, elastisch verlagerbar ausgebildeten Rastclips 103a, 103b der Fixiereinrichtung 102, die zwischen sich die Rastöffnung 1020 definieren. Ist der Motor 2 bestimmungsgemäß um die Schwenkachse D geschwenkt worden und erreicht der Motor 2 hierdurch eine vorgegebene Fixierposition in der Lagermulde 100, können die durch den Rastvorspruch 22 elastisch verlagerten Rastclips 103a und 103b in eine insbesondere in der der Querschnittsansicht der Figur 5 ersichtliche Verriegelungsstellung zurückschnappen. In dieser Verriegelungsstellung ist der Rastvorsprung 22 des Motors 2 kraft- und formschlüssig zwischen den jeweils an vorstehenden Rastlaschen ausgebildeten Rastclips 103a und 103b eingefasst und damit über die Rastclips 103a und 103b an dem Motorbefestigungsbereich 10 fixiert.

Über das Schwenken des Motors 2 aus der in der Figur 2B ersichtlichen Montageposition in die beispielsweise in der Figur 2C ersichtliche Fixierposition und eine hierbei auf dem Motor 2 wirkende Verstellkraft werden folglich die Rastclips 103a und 103b elastisch nach außen verlagert, bis sie an dem Rastvorsprungs 22 wieder einschnappen können. Der Motor 2 kann derart entlang eines über die Schwenklagerstellen 101a und 101b definierten Schwenkwegs um die Schwenkachse D in eine Fixierposition geschwenkt werden, bei deren Erreichen der Motor 2 selbsttätig über die elastischen Rastclips 103a und 103b fixiert ist, ohne dass hierfür zusätzliche Befestigungselemente, wie Schrauben, Bolzen oder Niete, montiert werden müssten.

Um die Fixierposition des Motors 2 in der Lagermulde 100 zusätzlich zu sichern, sind die Sicherungsstifte 104a und 104b vorgesehen. Diese Sicherungsstifte 104a und 104b sind jeweils einem Rastclip 103a oder 103b zugeordnet und liegen in einem Auslieferungszustand des Montageträgers 1 in einer Grundstellung entsprechend der Figur 2C an dem Motorbefestigungsbereich 10 vor. Hierbei sind die Sicherungsstifte 104a und 104b über jeweils einen Schwächungsbereich 1050 an einem an den jeweiligen zugeordneten Rastclip 103a, 103b angrenzenden Bodenabschnitt des Motorbefestigungsbereichs 10 vorgesehen und ragen in eine an einer Unterseite des Motorbefestigungsbereichs 10 jeweils vorgesehene Zugangsöffnung 106a oder 106b.

Ist der Motor 2 bestimmungsgemäß in die Fixierposition geschwenkt und an den Rastclips 103a und 103b verrastet, können die Sicherungsstifte 104a und 104b durch Drücken entlang einer Verstellrichtung R4 entsprechend der Figur 2D aus ihrer Grundstellung jeweils in eine Sicherungsstellung gedrückt werden. Hierbei wird dann beispielsweise manuell auf eine Druckfläche 1040a oder 1040b eines Sicherungsstifts 104a oder 104b eine Druckkraft ausgeübt. Die Druckflächen 1040a und 1040b sind hierbei über die Zugangsöffnungen 106a und 106b zugänglich. Übersteigt die ausgeübte Druckkraft einen vorgegebenen Schwellwert, versagt der jeweilige Schwächungsbereich 1050 und gestattet eine Verstellung des jeweiligen Sicherungsstift 104a, 104b in einen an den zugehörigen Rastclip 103a, 103b angrenzenden Führungskörper in Form einer Führungshülse 105a, 105b.

Über diese Führungshülse 105a oder 105b lässt sich der Sicherungsstift 104a oder 104b geführt in eine Sicherungsstellung drücken, in der der Sicherungsstift 104a, 104b den jeweils zugeordneten Rastclip 103a, 103b abstützt und hierüber einer elastischen Verlagerung des Rastclips 103a oder 103b nach außen entgegenwirkt. Der in die Sicherungsstellung überführte Sicherungsstift 104a oder 104b stützt somit jeweils außenseitig einen zugeordneten Rastclip 103a, 103b derart blockierend ab, dass der jeweilige Rastclip 103a, 103b nicht mehr so weit nach außen verschwenkt werden kann, dass der Rastvorsprungs 22 des Motors 2 aus der Rastöffnung 1020 heraus verlagert werden kann. In ihrer Sicherungsstellung stützen sich die eingedrückten Sicherungsstifte 104a und 104b einerseits gegen die elastischen Rastclips 103a und 103b sowie andererseits gegen eine starre Wandlung der Führungshülse 105a oder 105b ab, um eine Verlagerungsbewegung der Rastclips 103a, 103b zur Freigabe des Rastvorsprungs 22 des Motors zu unterbinden. Die Sicherungsstifte 104a und 104b erlauben somit eine zusätzliche Sicherung der Fixierung des Motors 2 an dem Motorbefestigungsbereich 10.

Indem diese Sicherungsstifte 104a und 104b ebenfalls an dem Motorbefestigungsbereich 10 ausgebildet, insbesondere an diesem ausgeformt oder an diesem angeformt sind, ist diese zusätzliche Sicherung der Fixierung nicht mit einer separaten Anbringung zusätzlicher Befestigungselemente verbunden. An dem Motorträger 1 sind vielmehr auch die Sicherungsstifte 104a und 104b integral ausgebildet und dort bereits in einem Auslieferungszustand des Motorträgers 1 verliersicher gehalten. Die Sicherungsstifte 104a und 104b können hierbei beispielsweise an den Motorträger 1 angespritzt sein und/oder Spreizdorne bilden.

Bei der dargestellten Ausführungsvariante ist der Motor 2 über einen Verbindungsabschnitt 21 an die die Schwenklagerstellen 101a, 101b vorgegebenen Kugelköpfe 1010 ansetzbar, der an dem Motorträger 1 einer kürzeren der zwei Antriebswellen zugewandt ist. Abweichend hierzu ist es jedoch selbstverständlich auch möglich, dass die Schwenklagerstellen 101a, 101b an dem Motorträger 1 für einen Verbindungsabschnitt des Motors 2 vorgesehen sind, der der längeren Antriebswelle zugewandt ist.

Ferner können der Motorbefestigungsbereich 10 und der Motor 2 derart ausgebildet und aufeinander abgestimmt sein, dass der Motor 2 in wenigstens zwei um 180° um eine Längsachse des Motors 2 gedrehten Montagepositionen an der Schwenklagerstelle ansetzbar und in die Fixierposition schwenkbar ist. Der Motor 2 kann folglich z.B. einerseits in einer ersten Ausrichtung zu dem Motorträger 1 entsprechend der Figur 2A und andererseits in einer zweiten Ausrichtung, in der der Motor 2 gegenüber der ersten Ausrichtung um seine Längsachse um 180° gedreht ist, an den Schwenklagerstelle 101a, 101b angesetzt werden, um eine Montageposition einzunehmen und anschließend in die Fixierposition zu schwenken. Hierdurch lässt sich insbesondere erreichen, dass der Motor 2 bauraumbedingt auch in einer anderen Ausrichtung bestimmungsgemäß an dem Motorträger 1 werkzeuglos festlegbar ist. Eine abweichende Ausrichtung des Motors 2 kann hierbei zum Beispiel von Vorteil sein, um einen Steckverbinder des Motor 2 für den Anschluss an eine Stromversorgung und eine übergeordnete Steuereinheit leichter zugänglich zu machen.

### Bezugszeichenliste

- 1: Motorträger
- 10: Motorbefestigungsbereich
- 100: Lagermulde
- 1001: Stützrippe
- 1010: Kugelkopf (Schwenklagerabschnitt)
- 101a, 101b: Schwenklagerstelle
- 102: Fixiereinrichtung
- 1020: Rastöffnung
- 103a, 103b: Rastclip (Fixierungselement)
- 1040a, 1040b: Drückfläche
- 104a, 104b: Sicherungsstift (Sicherungselement)
- 1050: Schwächungsbereich
- 105a, 105b: Führungshülse (Führungskörper)
- 106a, 106b: Zugangsöffnung
- 11: Wellenführung
- 1a, 1b: Trägerbefestigungsbereich
- 2: Motor
- 21: Verbindungsabschnitt
- 211a, 211b: Stecköffnung
- 22: Rastvorsprung (Fixierabschnitt)
- D: Schwenkachse
- O1, O2: Wellenöffnung
- R1 - R4: Richtung
- S1a, S1b: Unterschiene
- S2a, S2b: Oberschiene (Schienenbauteil)
- SA1, SA2: Schienenanordnung (Längsverstelleinrichtung)

## Patentansprüche

1. Motorträger für einen Fahrzeugsitz, mit
- mindestens zwei Trägerbefestigungsbereichen (1a, 1b) für die Festlegung des Motorträgers (1) an zwei einander gegenüberliegenden Bauteilen (S2a, S2b) des Fahrzeugsitzes und
- mindestens einem Motorbefestigungsbereich (10) für die Festlegung eines Motors (2) an dem Motorträger (1),
wobei der Motorträger (1) an dem Motorbefestigungsbereich (10) mindestens eine Schwenklagerstelle (101a, 101b) und mindestens ein Fixierungselement (103a, 103b) ausbildet und die mindestens eine Schwenklagerstelle (101a, 101b) eingerichtet ist, dem Motor (2) an dem Motorbefestigungsbereich (10) eine Montageposition vorzugeben, aus der der an dem Motorbefestigungsbereich (10) angeordnete Motor (2) entlang eines mit der mindestens einen Schwenklagerstelle (101a, 101b) vorgegebenen Schwenkwegs in eine Fixierposition schwenkbar ist, bei deren Erreichen der Motor (2) über das mindestens eine Fixierungselement (103a, 103b) fixiert ist
**dadurch gekennzeichnet, dass**
die mindestens eine Schwenklagerstelle (101a, 101b) durch einen kugelkopfförmigen Schwenklagerabschnitt (1010) gebildet ist.

2. Motorträger nach Anspruch 1, **dadurch gekennzeichnet, dass** die mindestens eine Schwenklagerstelle (101a, 101b) an einem an dem Motorbefestigungsbereich (10) vorstehenden Schwenklagerabschnitt (1010) ausgebildet ist.

3. Motorträger nach einem der Ansprüche 1 oder 2, **dadurch gekennzeichnet, dass** an dem Motorbefestigungsbereich (10) eine Lagermulde (100) für den Motor (2) ausgebildet ist.

4. Motorträger nach Anspruch 4, **dadurch gekennzeichnet, dass** der Schwenklagerabschnitt (1010) in die Lagermulde (100) ragt.

5. Motorträger nach einem der vorhergehenden Ansprüche, **dadurch gekennzeichnet, dass** wenigstens zwei Schwenklagerstellen (101a, 101b) an dem Motorbefestigungsbereich (10) ausgebildet sind, die gemeinsam eine Schwenkachse (D) für das Schwenken des Motors (2) aus der Montageposition in die Fixierposition vorgeben.

6. Motorträger nach einem der vorhergehenden Ansprüche, **dadurch gekennzeichnet, dass** das mindestens eine Fixierungselement (103a, 103b) verlagerbar ist.

7. Motorträger nach Anspruch 6, **dadurch gekennzeichnet, dass** das mindestens eine Fixierungselement (103a, 103b) elastisch verlagerbar ausgebildet ist.

8. Motorträger nach Anspruch 6 oder 7, **dadurch gekennzeichnet, dass** das mindestens eine Fixierungselement einen Rastclip (103a, 103b) umfasst.

9. Motorträger nach einem der Ansprüche 6 bis 8, **dadurch gekennzeichnet, dass** der Motorträger (1) an dem Motorbefestigungsbereich (10) zusätzlich mindestens ein Sicherungselement (104a, 104b) aufweist, das
- in einer Grundstellung vorliegt, in der das mindestens Sicherungselement (104a, 104b) eine zur Fixierung des Motors (2) auszuführende Verlagerungsbewegung des mindestens einen Fixierungselements (103a, 103b) gestattet, und
- an dem Motorbefestigungsbereich (10) in eine Sicherungsstellung überführbar ist, in der das mindestens eine Sicherungselement (104a, 104b) einer Verlagerungsbewegung des mindestens einen Fixierungselements (103a, 103b), entgegenwirkt.

10. Motorträger nach Anspruch 9, **dadurch gekennzeichnet, dass** das mindestens eine Sicherungselement (104a, 104b) an dem Motorbefestigungsbereich (10) ausgebildet ist.

11. Motorträger nach Anspruch 10, **dadurch gekennzeichnet, dass** das mindestens eine Sicherungselement (104a, 104b) in seiner Grundstellung über mindestens einen Schwächungsbereich (1050) stoffschlüssig mit einem angrenzenden Abschnitt des Motorbefestigungsbereichs (10) verbunden ist und der mindestens eine Schwächungsbereich (1050) eingerichtet ist, bei einer auf das mindestens eine Sicherungselement (104a, 104b) aufgebrachten und einen vorgegebenen Schwellkraft übersteigenden Kraft zu versagen, um eine Überführung des mindestens einen Sicherungselements (104a, 104b) aus seiner Grundstellung in die Sicherungsstellung zu gestatten.

12. Fahrzeugsitz mit einem Motorträger nach einem der vorhergehenden Ansprüche.

13. Verfahren zur Montage eines Motors (2) an einen Motorträger (1) für einen Fahrzeugsitz, wobei der Motorträger (1) einen Motorbefestigungsbereich (10) mit mindestens einer Schwenklagerstelle (101a, 101b) und mindestens einem Fixierungselement (103a, 103b) aufweist, wobei die mindestens eine Schwenklagerstelle (101a, 101b) durch einen kugelkopfförmigen Schwenklagerabschnitt (1010) gebildet ist, und das Verfahren wenigstens folgende Schritte umfasst:
- Ansetzen des Motors (2) an die mindestens eine Schwenklagerstelle (101a, 101b), sodass der Motor (2) in einer Montageposition an dem Motorträger (1) vorliegt, in der ein Verbindungsabschnitt (21) des Motors (2) die Schwenklagerstelle (101a, 101b) des Motorbefestigungsbereichs (10) kontaktiert, und
- Schwenken des Motors (2) um eine im Kontakt des Verbindungsabschnitts (21) mit der Schwenklagerstelle (101a, 101b) definierte Schwenkachse aus der Montageposition in eine über den Motorbefestigungsbereich (10) vorgegebene Fixierposition, wobei der Motor (2) bei Erreichen der Fixierposition über das mindestens eine Fixierungselement (103a, 103b) werkzeuglos an dem Motorträger (1) fixiert wird.

## Claims

1. A motor support for a vehicle seat, comprising
- at least two support fixing areas (1a, 1b) for fixing the motor support (1) to two mutually opposite components (S2a, S2b) of the vehicle seat, and
- at least one motor fixing area (10) for fixing a motor (2) to the motor support (1),
wherein the motor support (1) forms at least one pivot bearing point (101a, 101b) and at least one fixing element (103a, 103b) at the motor fixing area (10), and the at least one pivot bearing point (101a, 101b) is adapted to specify a mounting position for the motor (2) at the motor fixing area (10), from which the motor (2) arranged on the motor fixing area (10) can be pivoted into a fixing position along a pivoting path specified with the at least one pivot bearing point (101a, 101b), upon reaching of which the motor (2) is fixed via the at least one fixing element (103a, 103b),
**characterized in that**
the at least one pivot bearing point (101a, 101b) is formed by a ball head-shaped pivot bearing portion (1010).

2. The motor support according to claim 1, **characterized in that** the at least one pivot bearing point (101a, 101b) is formed at a pivot bearing portion (1010) protruding from the motor fixing area (10).

3. The motor support according to any of claims 1 or 2, **characterized in that** a bearing depression (100) for the motor (2) is formed at the motor fixing area (10).

4. The motor support according to claim 4, **characterized in that** the pivot bearing portion (1010) protrudes into the bearing depression.

5. The motor support according to any of the preceding claims, **characterized in that** at least two pivot bearing points (101a, 101b) are formed at the motor fixing area (10), which jointly specify a pivot axis (D) for pivoting the motor (2) from the mounting position into the fixing position.

6. The motor support according to any of the preceding claims, **characterized in that** the at least one fixing element (103a, 103b) is displaceable.

7. The motor support according to claim 6, **characterized in that** the at least one fixing element (103a, 103b) is formed to be elastically displaceable.

8. The motor support according to claim 6 or 7, **characterized in that** the at least one fixing element comprises a latching clip (103a, 103b).

9. The motor support according to any of claims 6 to 8, **characterized in that** at the motor fixing area (10) the motor support (1) additionally includes at least one securing element (104a, 104b), which
- is present in a normal position in which the at least one securing element (104a, 104b) permits a displacing movement of the at least one fixing element (103a, 103b) to be carried out for fixing the motor (2), and
- at the motor fixing area (10) can be transferred into a securing position in which the at least one securing element (104a, 104b) counteracts a displacing movement of the at least one fixing element (103a, 103b).

10. The motor support according to claim 9, **characterized in that** the at least one securing element (104a, 104b) is formed at the motor fixing area (10).

11. The motor support according to claim 10, **characterized in that** in its normal position the at least one securing element (104a, 104b) is cohesively connected to an adjacent portion of the motor fixing area (10) via at least one area of weakness (1050), and the at least one area of weakness (1050) is adapted to fail when a force is applied onto the at least one securing element (104a, 104b) and exceeds a specified threshold force, in order to permit a transfer of the at least one securing element (104a, 104b) from its normal position into the securing position.

12. A vehicle seat comprising a motor support according to any of the preceding claims.

13. A method for mounting a motor (2) to a motor support (1) for a vehicle seat, wherein the motor support (1) includes a motor fixing area (10) with at least one pivot bearing point (101a, 101b) and at least one fixing element (103a, 103b), wherein the at least one pivot bearing point (101a, 101b) is formed by a ball head-shaped pivot bearing portion (1010), and the method comprises at least the following steps:
- attaching the motor (2) to the at least one pivot bearing point (101a, 101b) so that the motor (2) is present in a mounting position on the motor support (1), in which a connecting portion (21) of the motor (2) contacts the pivot bearing point (101a, 101b) of the motor fixing area (10), and
- pivoting the motor (2) about a pivot axis defined in contact of the connecting portion (21) with the pivot bearing point (101a, 101b) from the mounting position into a fixing position specified via the motor fixing area (10), wherein upon reaching of the fixing position the motor (2) is fixed to the motor support (1) without any tool via the at least one fixing element (103a, 103b).

## Revendications

1. Support de moteur pour un siège de véhicule, comportant
- au moins deux zones de fixation de support (1a, 1b) pour la fixation du support de moteur (1) sur deux composants (S2a, S2b) opposés l'un à l'autre du siège de véhicule et
- au moins une zone de fixation de moteur (10) pour la fixation d'un moteur (2) sur le support de moteur (1),
le support de moteur (1) formant sur la zone de fixation de moteur (10) au moins un point de palier pivotant (101a, 101b) et au moins un élément de fixation (103a, 103b), et l'au moins un point de palier pivotant (101a, 101b) étant conçu pour donner au moteur (2) une position de montage sur la zone de fixation de moteur (10), à partir de laquelle le moteur (2) agencé sur la zone de fixation de moteur (10) peut pivoter le long d'une course de pivotement prédéfinie avec l'au moins un point de palier pivotant (101a, 101b) dans une position de fixation, à laquelle le moteur (2) est fixé par l'au moins un élément de fixation (103a, 103b),
**caractérisé en ce que**
l'au moins un point de palier pivotant (101a, 101b) est formé par un tronçon de palier pivotant (1010) en forme de tête sphérique.

2. Support de moteur selon la revendication 1, **caractérisé en ce que** l'au moins un point de palier pivotant (101a, 101b) est formé sur un tronçon de palier pivotant (1010) faisant saillie sur la zone de fixation de moteur (10).

3. Support de moteur selon l'une quelconque des revendications 1 ou 2, **caractérisé en ce qu'**un creux de palier (100) pour le moteur (2) est formé sur la zone de fixation de moteur (10).

4. Support de moteur selon la revendication 4, **caractérisé en ce que** le tronçon de palier pivotant (1010) fait saillie dans le creux de palier (100).

5. Support de moteur selon l'une quelconque des revendications précédentes, **caractérisé en ce qu'**au moins deux points de palier pivotant (101a, 101b) sont formés sur la zone de fixation de moteur (10), qui définissent ensemble un axe de pivotement (D) pour le pivotement du moteur (2) de la position de montage dans la position de fixation.

6. Support de moteur selon l'une quelconque des revendications précédentes, **caractérisé en ce que** l'au moins un élément de fixation (103a, 103b) peut être déplacé.

7. Support de moteur selon la revendication 6, **caractérisé en ce que** l'au moins un élément de fixation (103a, 103b) est formé à être déplacé élastiquement.

8. Support de moteur selon la revendication 6 ou 7, **caractérisé en ce que** l'au moins un élément de fixation comporte un clip d'encliquetage (103a, 103b).

9. Support de moteur selon l'une quelconque des revendications 6 à 8, **caractérisé en ce que** le support de moteur (1) présente en outre, sur la zone de fixation de moteur (10), au moins un élément de sécurité (104a, 104b), qui
- est présent dans une position de base, dans laquelle ledit au moins un élément de sécurité (104a, 104b) permet un mouvement de déplacement dudit au moins un élément de fixation (103a, 103b) à effectuer pour la fixation du moteur (2), et
- sur la zone de fixation de moteur (10), peut être transféré dans une position de sécurité dans laquelle l'au moins un élément de sécurité (104a, 104b) s'oppose à un mouvement de déplacement de l'au moins un élément de fixation (103a, 103b).

10. Support de moteur selon la revendication 9, **caractérisé en ce que** l'au moins un élément de sécurité (104a, 104b) est formé sur la zone de fixation de moteur (10).

11. Support de moteur selon la revendication 10, **caractérisé en ce que** l'au moins un élément de sécurité (104a, 104b), dans sa position de base, est relié par adhérence à un tronçon adjacent de la zone de fixation de moteur (10) par l'intermédiaire d'au moins une zone d'affaiblissement (1050), et l'au moins une zone d'affaiblissement (1050) est aménagée de céder à une force appliquée à l'au moins un élément de sécurité (104a, 104b) et dépassant une force de seuil prédéterminée, afin de permettre un transfert de l'au moins un élément de sécurité (104a, 104b) de sa position de base dans la position de sécurité.

12. Siège de véhicule comportant un support moteur selon l'une quelconque des revendications précédentes.

13. Procédé de montage d'un moteur (2) sur un support de moteur (1) pour un siège de véhicule, le support de moteur (1) comprenant une zone de fixation de moteur (10) avec au moins un point de palier pivotant (101a, 101b) et au moins un élément de fixation (103a, 103b), l'au moins un point de palier pivotant (101a, 101b) étant formé par un tronçon de palier pivotant (1010) en forme de tête sphérique, le procédé comprenant au moins les étapes suivantes :
- l'attachement du moteur (2) sur l'au moins un point de palier pivotant (101a, 101b) de sorte que le moteur (2) soit dans une position de montage sur le support de moteur (1), dans laquelle un tronçon de connexion (21) du moteur (2) est en contact avec le point de palier pivotant (101a, 101b) de la zone de fixation de moteur (10), et
- le pivotement du moteur (2) autour d'un axe de pivotement défini dans le contact du tronçon de connexion (21) avec le point de palier pivotant (101a, 101b), de la position de montage dans une position de fixation prédéfinie par la zone de fixation de moteur (10), le moteur (2) étant fixé sans outil sur le support de moteur (1) par l'intermédiaire de l'au moins un élément de fixation (103a, 103b) lorsque la position de fixation est atteinte.
